# EUROPEAN PATENT APPLICATION

(11) **EP 4 730 734 A1**
(43) Date of publication of application: **22.04.2026**
(21) Application number: 25185614.2
(22) Date of filing: 26.06.2025
(51) Int. Cl.: H04L 41/0833, H04L 41/0859, H04L 41/0896, H04L 43/08, H04L 43/0894, H04L 41/0894, H04L 41/14, H04L 41/16

(54) **AUTOMATICALLY REDUCING A SPEED OF A LINK TO SAVE POWER**

(30) Priority: 16.10.2024 US 202418917340
(71) Applicant: Juniper Networks, Inc., Sunnyvale, CA 94089-1206 (US)
(72) Inventor: GHOSH, Sandip Kumar, Sunnyvale, 94089 (US); NAYAK, Lohith H., Sunnyvale, 94089 (US); SANGLI, Srihari Ramachandra, Sunnyvale, 94089 (US)
(74) Representative: D Young & Co LLP

(57) **Abstract**

A first network device may determine a reduced speed for a link and a time period for setting the reduced speed, and may provide, to a second network device, a speed change request identifying the reduced speed and the time period. The first network device may receive an acknowledgement approving the speed change request from the second network device, and may start the time period based on receiving the acknowledgement. The first network device may set the link from an original speed to the reduced speed, and may check for a rollback condition until the time period expires. The first network device may reset the link to the original speed based on expiration of the time period or occurrence of the rollback condition.

## Description

### BACKGROUND

An interface or port of a network device includes multiple hardware components (e.g., optics, a laser, a processor, and/or the like) that enable the network device to operate and to establish a link with another network device. An interface or port of the other network device also includes the multiple hardware components. Operation of the link, the connected network devices, and the hardware components of the connected network devices consume power.

### SUMMARY

Particular embodiments are set out in the independent claims. Various optional examples are set out in the dependent claims. Some implementations described herein relate to a method. The method may include determining, by a first network device, a reduced speed for a link and a time period for setting the reduced speed, and providing, to a second network device, a speed change request identifying the reduced speed and the time period. The method may include receiving an acknowledgement approving the speed change request from the second network device, and starting the time period based on receiving the acknowledgement. The method may include setting the link from an original speed to the reduced speed, and checking for a rollback condition until the time period expires. The method may include resetting the link to the original speed based on expiration of the time period or occurrence of the rollback condition.

Some implementations described herein relate to a first network device. The first network device may include one or more memories and one or more processors. The one or more processors may be configured to determine a reduced speed for a link and a time period for setting the reduced speed, and provide, to a second network device, a speed change request identifying the reduced speed and the time period. The one or more processors may be configured to receive an acknowledgement approving the speed change request from the second network device, and start the time period based on receiving the acknowledgement. The one or more processors may be configured to set the link from an original speed to the reduced speed, and store data identifying the link, the time period, and the reduced speed in a persistent data structure. The one or more processors may be configured to check for a rollback condition until the time period expires, and reset the link to the original speed based on expiration of the time period or occurrence of the rollback condition.

Some implementations described herein relate to a non-transitory computer-readable medium that stores a set of instructions. The set of instructions, when executed by one or more processors of a first network device, may cause the first network device to determine a reduced speed for a link and a time period for setting the reduced speed, and provide, to a second network device, a speed change request identifying the reduced speed and the time period. The set of instructions, when executed by one or more processors of the first network device, may cause the first network device to receive an acknowledgement approving the speed change request from the second network device, wherein each of the speed change request and the acknowledgement is based on a time-length-value (TLV), an organization-specific TLV subtype, or another type of communication indicator. The set of instructions, when executed by one or more processors of the first network device, may cause the first network device to start the time period based on receiving the acknowledgement, and set the link from an original speed to the reduced speed. The set of instructions, when executed by one or more processors of the first network device, may cause the first network device to check for a rollback condition until the time period , and reset the link to the original speed based on expiration of the time period or occurrence of the rollback condition.

### BRIEF DESCRIPTION OF THE DRAWINGS

Figs. 1A-1H are diagrams of an example associated with automatically reducing a speed of a link to save power.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for automatically reducing a speed of a link to save power.

### DETAILED DESCRIPTION

The following detailed description of example implementations refers to the accompanying drawings. The same reference numbers in different drawings may identify the same or similar elements.

Network planners design a network for worst-case traffic conditions while also catering to various potential resiliency scenarios. Typically, most of the time, the network capacity is underutilized due to traffic conditions. Also, the actual traffic patterns exhibit periodicity with regards to overall network utilization.

The total power required to keep a network device, hardware components of the network device, and a link of the network device operational is significant. The link, an interface for the link, and associated hardware components consume significant power even when the link and the interface are in an idle state (e.g., not sending or receiving traffic). For example, a network device with one hundred (100) four-hundred (400) gigabit (G) ports will consume kilowatts (kW) of power for interfaces of the network device alone. Furthermore, when two directly connected network devices are not exchanging traffic, the links and the interfaces of the network devices unnecessarily consume power. Thus, current techniques for managing network devices consume computing resources (e.g., processing resources, memory resources, communication resources, and/or the like), networking resources, and/or the like associated with failing to adjust power consumption and bandwidth of connected network devices based on a traffic rate, failing to power off links, interfaces, and/or hardware components of the connected network device during idle states and wasting power with the idle links, interfaces, and/or hardware components, failing to power off the idle links, interfaces, and/or hardware components during non-peak utilization times of the connected network devices, unnecessarily maintaining the idle links, interfaces, and/or hardware components during non-peak utilization times of the connected network devices, and/or the like.

Some implementations described herein relate to automatically reducing a speed of a link to save power. For example, a first network device may determine a reduced speed for a link and a time period for setting the reduced speed, and may provide, to a second network device, a speed change request identifying the reduced speed and the time period. The first network device may receive an acknowledgement approving the speed change request from the second network device, and may start the time period based on receiving the acknowledgement. The first network device and the second network device may set the link from an original speed to the reduced speed, and may check for a rollback condition until the time period expires. The first network device may reset the link to the original speed based on expiration of the time period or occurrence of the rollback condition.

In this way, the implementations automatically reduce a speed of a link to save power. For example, a requestor network device may determine a duration of a time period for reducing a speed of a link with a receiver network device, and may provide, to the receiver network device, a speed change request identifying the link, the duration, and a reduced speed. The receiver network device may acknowledge receipt of speed change request or may deny the speed change request. If the receiver network device denies the speed change request, the requestor network device may provide, to the receiver network device, another speed change request identifying the link, an adjusted duration, and the reduced speed. If the receiver network device acknowledges the speed change request, the requestor network device may start a timer set to expire at the determined duration specified and may set the link from an original speed to the reduced speed. When the timer expires, the requestor network device may reset the link from the reduced speed to the original speed.

Thus, connected network devices and/or other devices conserve computing resources, networking resources, and/or the like that would otherwise have been consumed by failing to adjust power consumption and bandwidth of connected network devices based on a traffic rate, failing to power off links, interfaces, and/or hardware components of the connected network device during idle states and wasting power with the idle links, interfaces, and/or hardware components, failing to power off the idle links, interfaces, and/or hardware components during non-peak utilization times of the connected network devices, unnecessarily maintaining the idle links, interfaces, and/or hardware components during non-peak utilization times of the connected network devices, and/or the like.

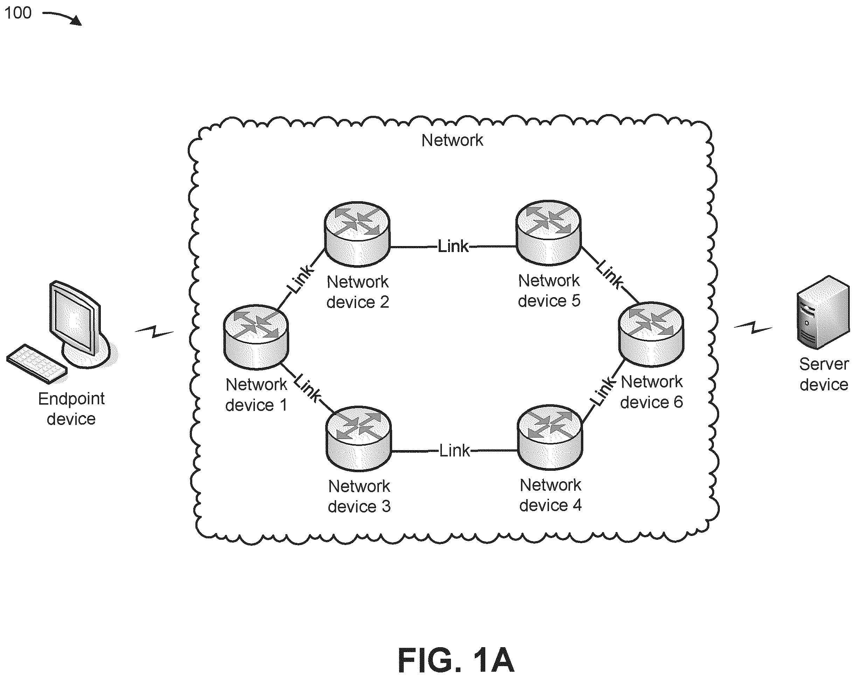

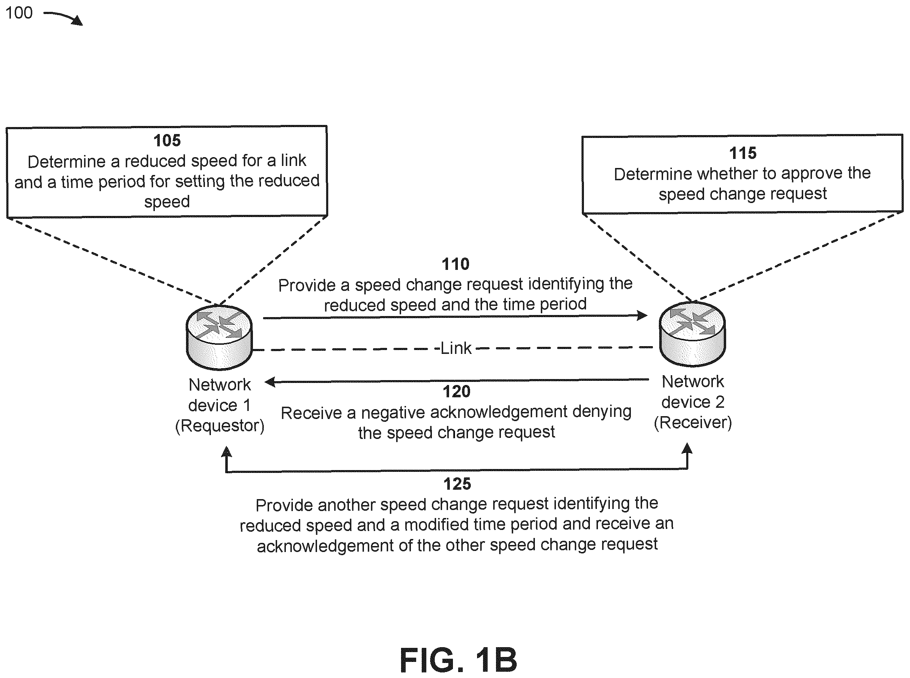

Figs. 1A-1H are diagrams of an example 100 associated with automatically reducing a speed of a link to save power. As shown in Fig. 1A, the example 100 includes an endpoint device associated with a network and a server device. The network may include multiple network devices, such as a first network device (e.g., network device 1), a second network device (e.g., network device 2), a third network device (e.g., network device 3), a fourth network device (e.g., network device 4), a fifth network device (e.g., network device 5), and a sixth network device (e.g., network device 6). Links may be provided between the first network device, the second network device, the third network device, the fourth network device, the fifth network device, and the sixth network device. Further details of the endpoint device, the server device, the network, the network devices, and the links are provided elsewhere herein. Although Figs. 1B-1H depict specific network devices performing the implementations described herein, each network device of the network may also perform the implementations described herein.

As shown in Fig. 1B, and by reference number 105, the first network device (e.g., a requestor) may determine a reduced speed for a link and a time period for setting the reduced speed. For example, the first network device may be a requestor network device and the second network device may be a receiver network device. The first network device may connect to the second network device via a link to be reduced in speed during off-peak time periods. The first network device and the second network device may be operated by the same network operator or by different network operators.

In some implementations, the first network device may determine the reduced speed for the link and the time period for setting the reduced speed based on inputs received from an operator of the network, inputs received from a network control point, inputs received from a machine learning model, a power saving policy, and/or the like. The network control point may determine the reduced speed and the time period based on analyzing historical network parameters identifying link utilization over time. The machine learning model may process the historical network parameters, and may generate the reduced speed and the time period based on processing the historical network parameters. For example, the first network device may determine that the reduced speed should be set for a time period from 10:00PM to 6:00AM. Alternatively, or additionally, the second network device may determine the reduced speed for the link and the time period for setting the reduced speed based on inputs received from the operator of the network, inputs received from a network control point, inputs received from a machine learning model, a power saving policy, and/or the like. For example, the second network device may determine that the reduced speed should be set for a time period from 11:00PM to 8:00AM. The first network device and the second network device may communicate via a protocol message exchange (e.g., link layer discovery protocol (LLDP) time-length-values (TLVs)) to determine a common (e.g., an agreed upon) time period for reducing the speed of the link. In the examples above, the reduced speed may be set for a time period from 11:00PM to 6:00AM.

In some implementations, the first network device and/or the second network may determine the reduced speed for the link and the time period for setting the reduced speed based on a power saving policy, such as: 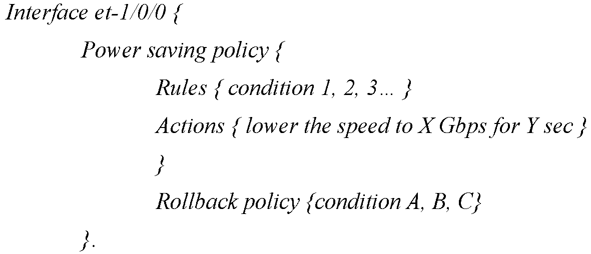 For example, if a load on the interface *et-1*/*0*/*0* (e.g., 400 Gigabits (G) default) is less than 30% for the last twenty minutes, the speed of the link may be reduced to 200 G for one-hundred and twenty minutes. If the load on the interface *et-1*/*0*/*0* is less than 10% for the last thirty minutes, the speed of the link may be reduced to 100 G for sixty minutes. If the current time is between 8:00PM and 6:00AM and the load on the interface *et-1*/*0*/*0* is less than 5% for the last twenty minutes, the speed of the link may be reduced to 10 G for one-hundred and twenty minutes. In one example of the rollback policy, if the utilization of the link goes above 70% and stays above 70% for five mins, then the link may be rolled back to an original speed (e.g., a higher speed). The rollback policy may be based on various factors, such as load on the link, time, and/or the like.

In some implementations, the first network device and/or the second network may determine the reduced speed for the link and the time period for setting the reduced speed based on a direct time window configuration, such as:

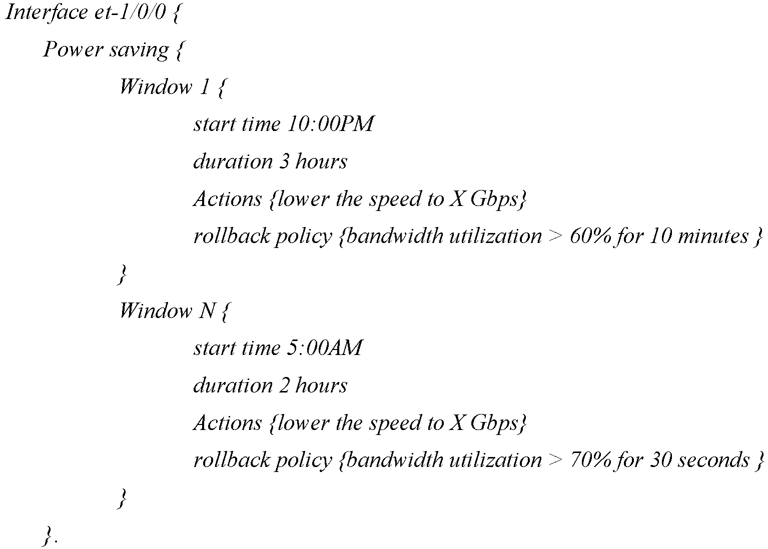

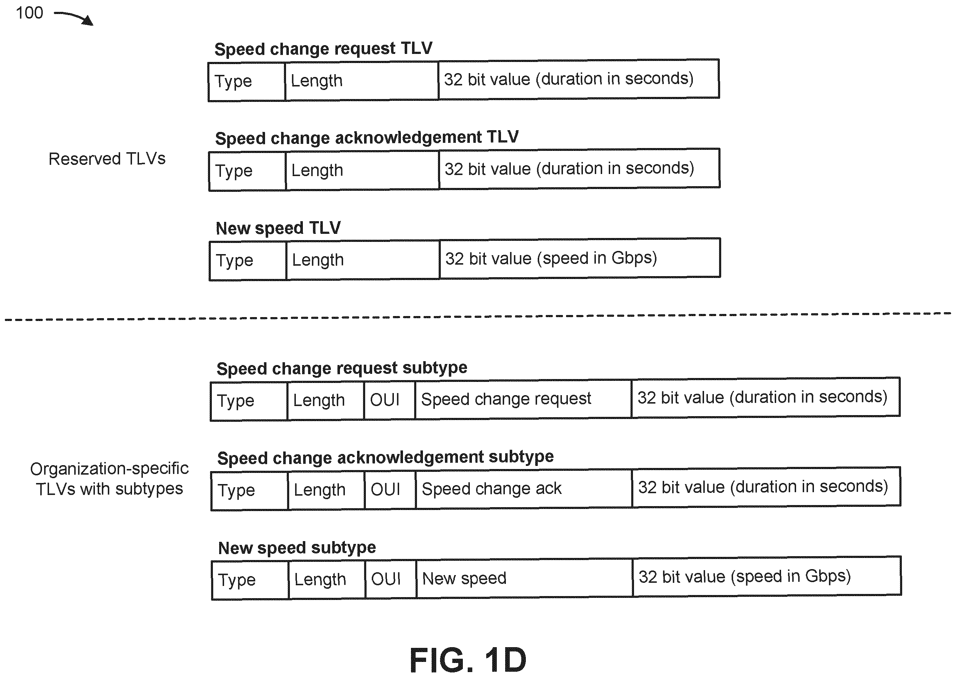

As further shown in Fig. 1B, and by reference number 110, the first network device may provide, to the second network device, a speed change request identifying the reduced speed and the time period. For example, the first network device may generate a speed change request that identifies the reduced speed and the time period. The first network device may provide the speed change request to the second network device, and the second network device may receive the speed change request. In some implementations, the speed change request may include a reserved TLV or an organization-specific TLV, as described below in connection with Fig. 1D.

As further shown in Fig. 1B, and by reference number 115, the second network device may determine whether to approve the speed change request. For example, the second network device may determine whether to approve the speed change request, whether to propose a different reduced speed and/or a different time period, whether to ignore the speed change request, and/or the like. In some implementations, the second network device may determine not to approve the speed change request. Alternatively, the second network device may determine to approve the speed change request.

As further shown in Fig. 1B, and by reference number 120, the first network device may receive a negative acknowledgement denying the speed change request from the second network device. In some implementations, when the second network device determines not to approve the speed change request, the second network device may generate the negative acknowledgement denying the speed change request (e.g., an acknowledgement with a zero value), and may provide the negative acknowledgement denying the speed change request to the first network device. The first network device may receive the negative acknowledgement denying the speed change request from the second network device. Alternatively, when the second network device determines to propose a different reduced speed and/or a different time period, the second network device may generate another speed change request identifying the different reduced speed and/or the different time period. The second network device may provide the other speed change request to the first network device, and the first network device may receive the other speed change request. Alternatively, when the second network device determines to ignore the speed change request, the second network device may ignore the speed change request and not send an acknowledgement of the speed change request. The lack of acknowledgement of the speed change request, within a specified time period (e.g., in seconds), may indicate, to the first network device, that the second network device does not approve the speed change request.

As further shown in Fig. 1B, and by reference number 125, the first network device may provide, to the second network device, another speed change request identifying the reduced speed and a modified time period (e.g., modified from the original time period) and may receive an acknowledgement of the other speed change request. For example, if the first network device receives the acknowledgement denying the speed change request, receives the other speed change request identifying the different reduced speed and/or the different time period, or does not receive an acknowledgement of the speed change request, the first network device may determine that the second network device does not approve of the speed change request. Thus, the first network device may generate another speed change request identifying the reduced speed and a modified time period that is different than the time period initially proposed by the first network device. In some implementations, the modified time period may include the different time period proposed by the second network device. The first network device may provide the other speed change request to the second network device, and the second network device may receive the other speed change request. The second network device may determine whether to approve the other speed change request in a similar manner as described above in connection with reference number 115.

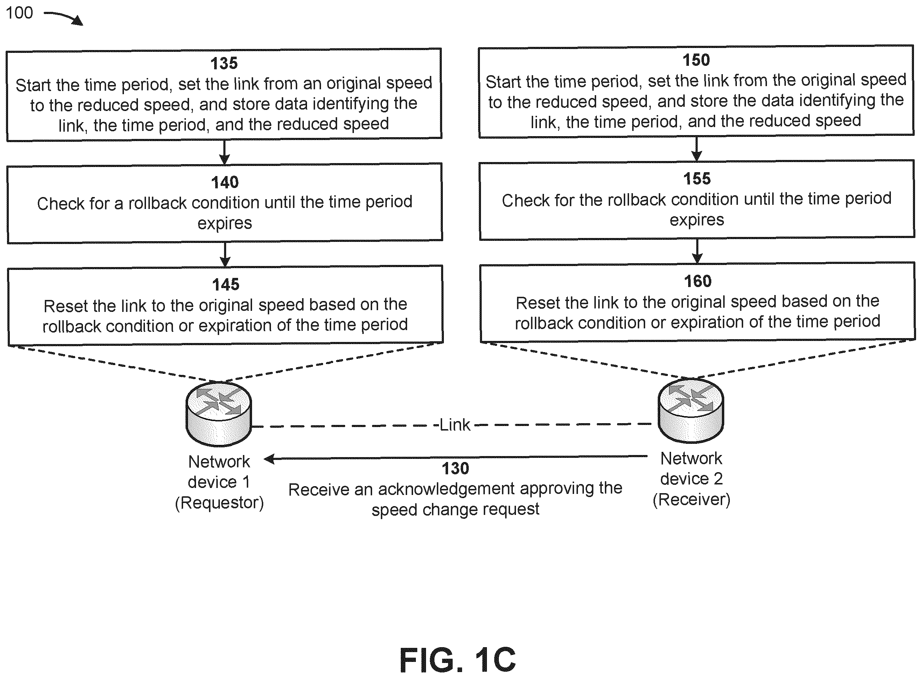

As shown in Fig. 1C, and by reference number 130, the first network device may receive an acknowledgement approving the speed change request from the second network device. For example, when the second network device determines to approve the speed change request, the second network device may generate an acknowledgement approving the speed change request (e.g., an acknowledgement with a non-zero value), and may provide the acknowledgement approving the speed change request to the first network device. The first network device may receive the acknowledgement approving the speed change request from the second network device.

As further shown in Fig. 1C, and by reference number 135, the first network device may start the time period, may set the link from an original speed to the reduced speed, and may store data identifying the link, the time period, and the reduced speed. For example, when the first network device receives the acknowledgement approving the speed change request, the first network device may start a timer for the time period and may set the link from an original speed to the reduced speed. In some implementations, the first network device may maintain the link at the reduced speed until expiration of the time period (e.g., the timer).

In some implementations, the first network device may store data identifying the link, the time period, and the reduced speed in a persistent data structure (e.g., a ternary content-addressable memory (TCAM)) associated with the first network device. In some implementations, the first network device may reboot prior to expiration of the time period or the timer may malfunction. In such implementations, the first network device may utilize the data identifying the link, the time period, and the reduced speed (e.g., stored in the persistent data structure) to quickly reset the link from the original speed to the reduced speed and maintain the reduced speed for a remaining portion of the time period.

As further shown in Fig. 1C, and by reference number 140, the first network device may check for a rollback condition until the time period expires. For example, the first network device may experience a rollback condition when traffic on the link unexpectedly increases, when a load on the first network device unexpectedly increases, and/or the like. When a rollback condition occurs, the first network device may need to roll back the link to a previous state (e.g., the original speed) to handle the increase in traffic, the increase in load, and/or the like. During the time period, the first network device may determine whether any rollback conditions are occurring. In some implementations, the first network device may not detect any rollback conditions prior to expiration of the time period. Alternatively, the first network device may detect one or more rollback conditions prior to expiration of the time period.

As further shown in Fig. 1C, and by reference number 145, the first network device may reset the link to the original speed based on the rollback condition or expiration of the time period. For example, if the first network detects a rollback condition based on checking for a rollback condition and prior to expiration of the time period, the first network device may roll back the link to the previous state by resetting the link to the original speed. Alternatively, if the first network device fails to detect a rollback condition and the time period expires, the first network device may rollback the link to the previous state by resetting the link to the original speed.

As further shown in Fig. 1C, and by reference number 150, the second network device may start the time period, may set the link from the original speed to the reduced speed, and may store the data identifying the link, the time period, and the reduced speed. For example, when the second network device provides the acknowledgement approving the speed change request, the second network device may start a timer for the time period and may set the link from the original speed to the reduced speed. In some implementations, the second network device may maintain the link at the reduced speed until expiration of the time period (e.g., the timer).

In some implementations, the second network device may store data identifying the link, the time period, and the reduced speed in a persistent data structure (e.g., a TCAM) associated with the second network device. In some implementations, the second network device may reboot prior to expiration of the time period or the timer may malfunction. In such implementations, the second network device may utilize the data identifying the link, the time period, and the reduced speed (e.g., stored in the persistent data structure) to quickly reset the link from the original speed to the reduced speed and maintain the reduced speed for a remaining portion of the time period.

As further shown in Fig. 1C, and by reference number 155, the second network device may check for a rollback condition until the time period expires. For example, the second network device may experience a rollback condition when traffic on the link unexpectedly increases, when a load on the second network device unexpectedly increases, and/or the like. When a rollback condition occurs, the second network device may need to roll back the link to a previous state (e.g., the original speed) to handle the increase in traffic, the increase in load, and/or the like. During the time period, the second network device may determine whether any rollback conditions are occurring. In some implementations, the second network device may not detect any rollback conditions prior to expiration of the time period. Alternatively, the second network device may detect one or more rollback conditions prior to expiration of the time period.

As further shown in Fig. 1C, and by reference number 160, the second network device may reset the link to the original speed based on the rollback condition or expiration of the time period. For example, if the second network detects a rollback condition based on checking for a rollback condition and prior to expiration of the time period, the second network device may roll back the link to the previous state by resetting the link to the original speed. Alternatively, if the second network device fails to detect a rollback condition and the time period expires, the second network device may rollback the link to the previous state by resetting the link to the original speed.

A top portion of Fig. 1D depicts example reserved TLVs for a speed change request, a speed change acknowledgement, and a new speed. As shown, the speed change request TLV may include a type field, a length field, and a value field (e.g., a 32 bit field indicating a duration of the time period in seconds). The speed change acknowledgement TLV may include a type field, a length field, and a value field (e.g., a 32 bit field indicating a duration of the time period in seconds). The new speed TLV may include type field, a length field, and a value field (e.g., a 32 bit field indicating a speed in gigabits per second (Gbps)).

A bottom portion of Fig. 1D depicts example organization-specific TLVs for a speed change request subtype, a speed change acknowledgement subtype, and a new speed subtype. As shown, the speed change request subtype may include a type field, a length field, an organizationally unique identifier (OUI) field, a speed change request field, and a value field (e.g., a 32 bit field indicating a duration of the time period in seconds). The speed change acknowledgement subtype may include a type field, a length field, an OUI field, a speed change acknowledgement field, and a value field (e.g., a 32 bit field indicating a duration of the time period in seconds). The new speed subtype may include type field, a length field, an OUI field, a new speed field, and a value field (e.g., a 32 bit field indicating a speed in Gbps).

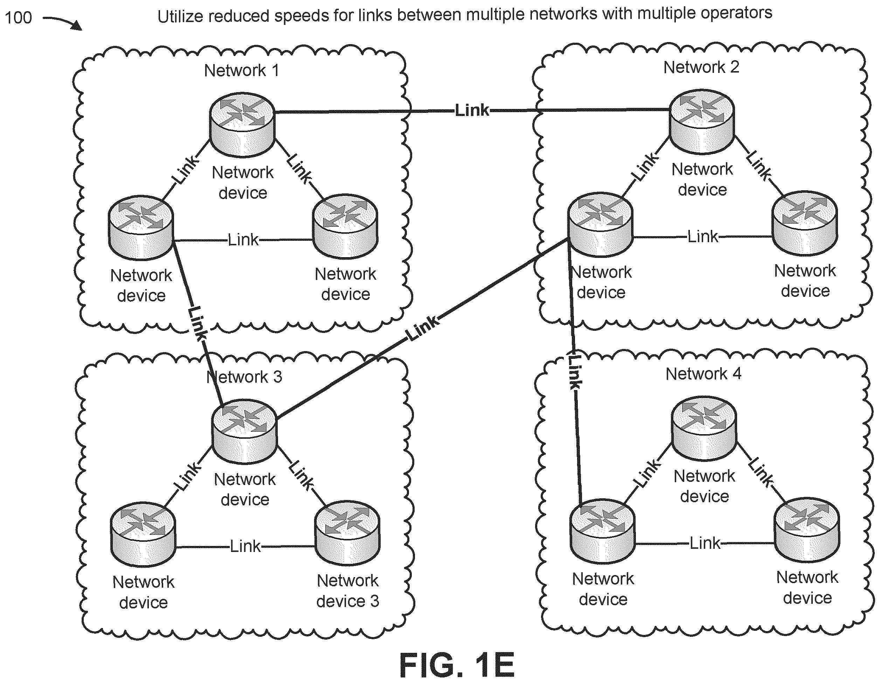

Fig. 1E depicts an example of utilizing reduced speeds for links between multiple networks associated with multiple operators. As shown, each of a first network (e.g., network 1), a second network (e.g., network 2), a third network (e.g., network 3), and a fourth network (e.g., network 4) may include network devices. Each of the multiple networks may be associated with a different operator. The multiple networks may interconnect via links provided between the multiple networks. In some implementations, the links between the multiple networks with multiple operators may utilize reduced speeds to conserve power, as disclosed elsewhere herein. In one example, during low load, off-peak hours, speeds of a few links may be reduced for a specified duration (e.g., automatically based on mutual agreement).

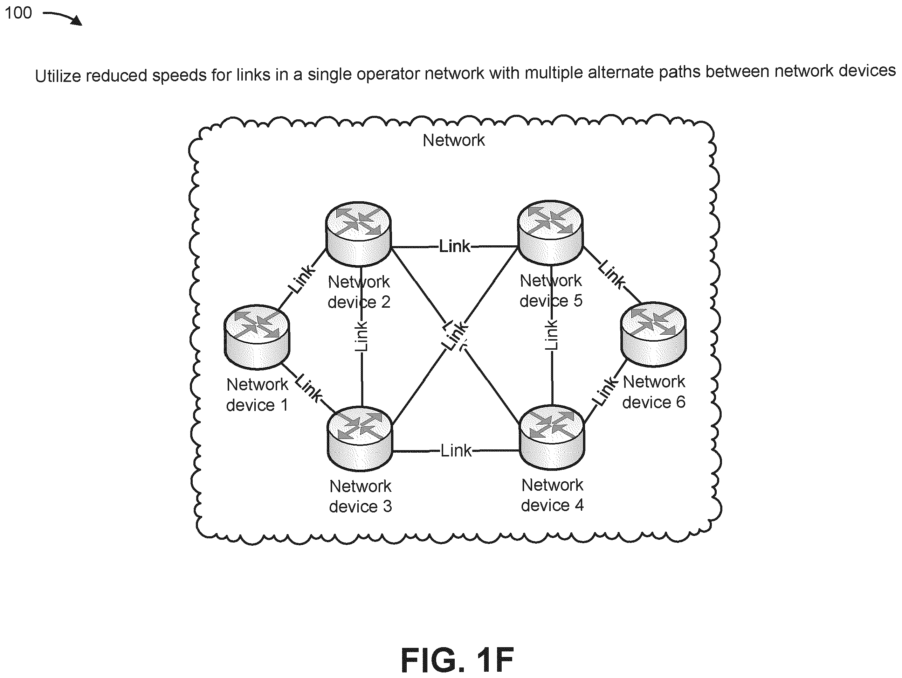

Fig. 1F depicts an example of utilizing reduced speeds for links in a single operator network with multiple alternate paths between network devices. As shown, a network may be managed by a single operator and may include multiple network devices, such as a first network device (e.g., network device 1), a second network device (e.g., network device 2), a third network device (e.g., network device 3), a fourth network device (e.g., network device 4), a fifth network device (e.g., network device 5), and a sixth network device (e.g., network device 6). Links may be provided between the first network device, the second network device, the third network device, the fourth network device, the fifth network device, and the sixth network device. In some implementations, the links between the multiple network devices in the single operator network may include multiple alternate paths between the network devices and may utilize reduced speeds to conserve power, as disclosed elsewhere herein. In one example, during low load, off-peak hours, speeds of a few links may be reduced for a specified duration (e.g., automatically based on mutual agreement).

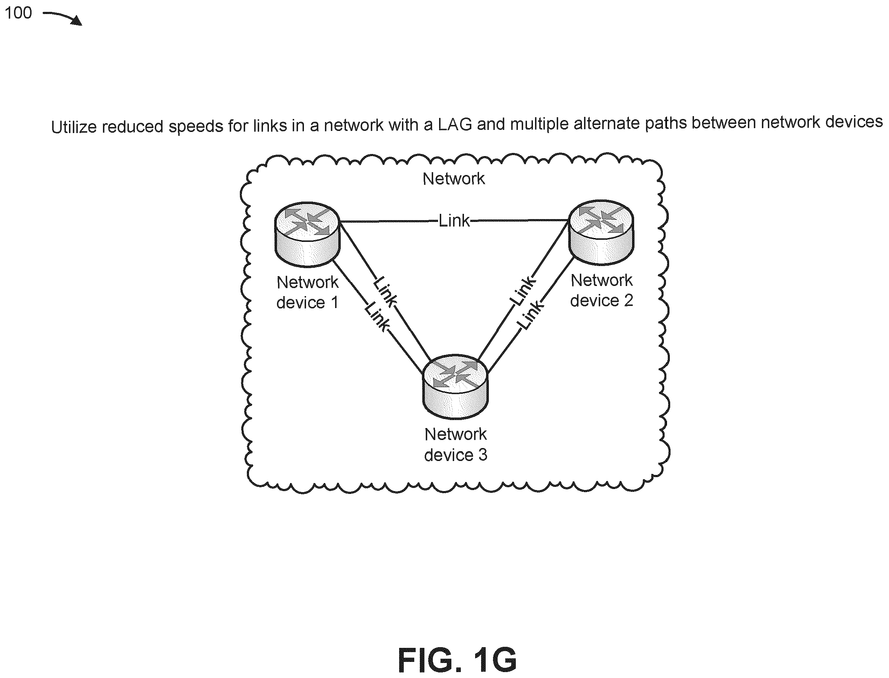

Fig. 1G depicts an example of utilizing reduced speeds for links in a network with a link aggregation group (LAG) or a multi-chassis LAG (MC-LAG) and multiple alternate paths between network devices. As shown, a network may include multiple network devices, such as a first network device (e.g., network device 1), a second network device (e.g., network device 2), and a third network device (e.g., network device 3). Multiple links and multiple alternate paths may be provided between the first network device and the third network device, and between the second network device and the third network device. The multiple links may form a LAG between the first network device and the third network device and between the second network device and the third network device. In some implementations, the links in the network with the LAGs and the multiple alternate paths between the network devices may utilize reduced speeds to conserve power, as disclosed elsewhere herein. In one example, during low load, off-peak hours, speeds of member links of the LAGs may be reduced for a specified duration (e.g., automatically based on mutual agreement).

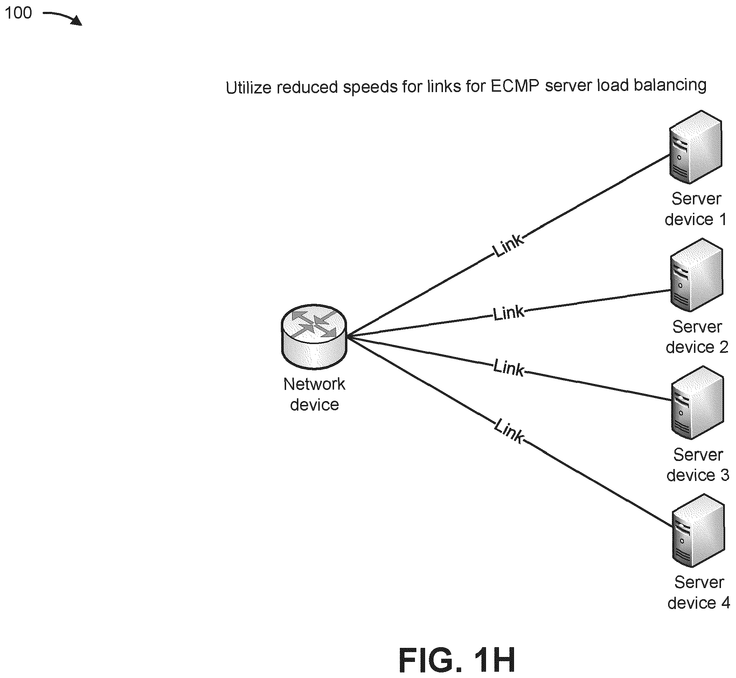

Fig. 1H depicts an example of utilizing reduced speeds for links for equal cost multi-path (ECMP) or weighted ECMP (WECMP) server load balancing. As shown, a network device may be associated with a first server device (e.g., service device 1), a second server device (e.g., service device 2), a third server device (e.g., service device 3), and a fourth server device (e.g., service device 4). The network device may connect to the first server device, the second server device, the third server device, and the fourth server device via links. In some implementations, the network device may utilize reduced speeds for the links for ECMP server load balancing. In one example, during low load, off-peak hours, speeds of one or more links may be reduced for a specified duration (e.g., automatically based on mutual agreement) to balance the loads on the server devices.

In this way, the implementations automatically reduce a speed of a link to save power. For example, a requestor network device may determine a duration of a time period for reducing a speed of a link with a receiver network device, and may provide, to the receiver network device, a speed change request identifying the link, the duration, and a reduced speed. The receiver network device may acknowledge receipt of speed change request or may deny the speed change request. If the receiver network device denies the speed change request, the requestor network device may provide, to the receiver network device, another speed change request identifying the link, an adjusted duration, and the reduced speed. If the receiver network device acknowledges the speed change request, the requestor network device may start a timer set to expire at the determined duration specified and may set the link from an original speed to the reduced speed. When the timer expires, the requestor network device reset the link from the reduced speed to the original speed.

Thus, connected network devices and/or other devices conserve computing resources, networking resources, and/or the like that would otherwise have been consumed by failing to adjust power consumption and bandwidth of connected network devices based on a traffic rate, failing to power off links, interfaces, and/or hardware components of the connected network device during idle states and wasting power with the idle links, interfaces, and/or hardware components, failing to power off the idle links, interfaces, and/or hardware components during non-peak utilization times of the connected network devices, unnecessarily maintaining the idle links, interfaces, and/or hardware components during non-peak utilization times of the connected network devices, and/or the like.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

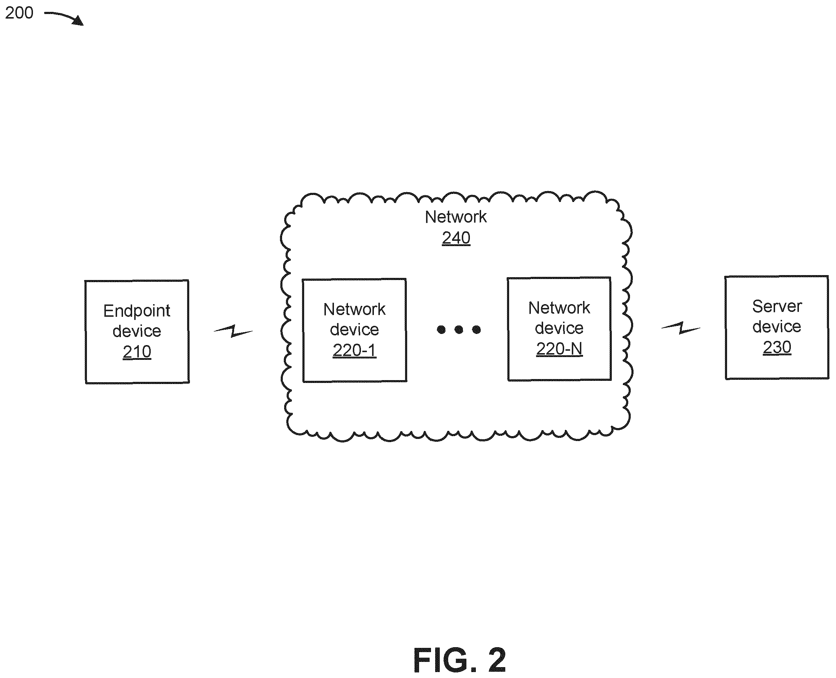

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a server device 230, and a network 240. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, a server device, a group of server devices, or a similar type of device. In some implementations, the endpoint device 210 may receive network traffic from and/or may provide network traffic to other endpoint devices 210 and/or the server device 230, via the network 240 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 240.

The server device 230 may include one or more devices capable of receiving, generating, storing, processing, providing, and/or routing information, as described elsewhere herein. The server device 230 may include a communication device and/or a computing device. For example, the server device 230 may include a server, such as an application server, a client server, a web server, a database server, a host server, a proxy server, a virtual server (e.g., executing on computing hardware), or a server in a cloud computing system. In some implementations, the server device 230 may include computing hardware used in a cloud computing environment.

The network 240 includes one or more wired and/or wireless networks. For example, the network 240 may include a packet switched network, a cellular network (e.g., a fifth generation (5G) network, a fourth generation (4G) network, such as a long-term evolution (LTE) network, a third generation (3G) network, a code division multiple access (CDMA) network), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

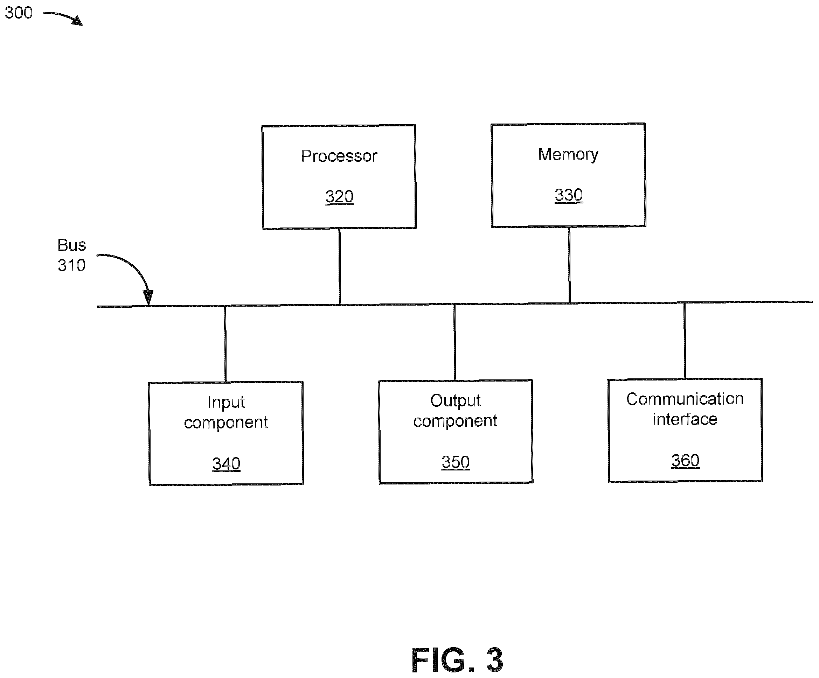

Fig. 3 is a diagram of example components of one or more devices of Fig. 2. The example components may be included in a device 300, which may correspond to the endpoint device 210, the network device 220, and/or the server device 230. In some implementations, the endpoint device 210, the network device 220, and/or the server device 230 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

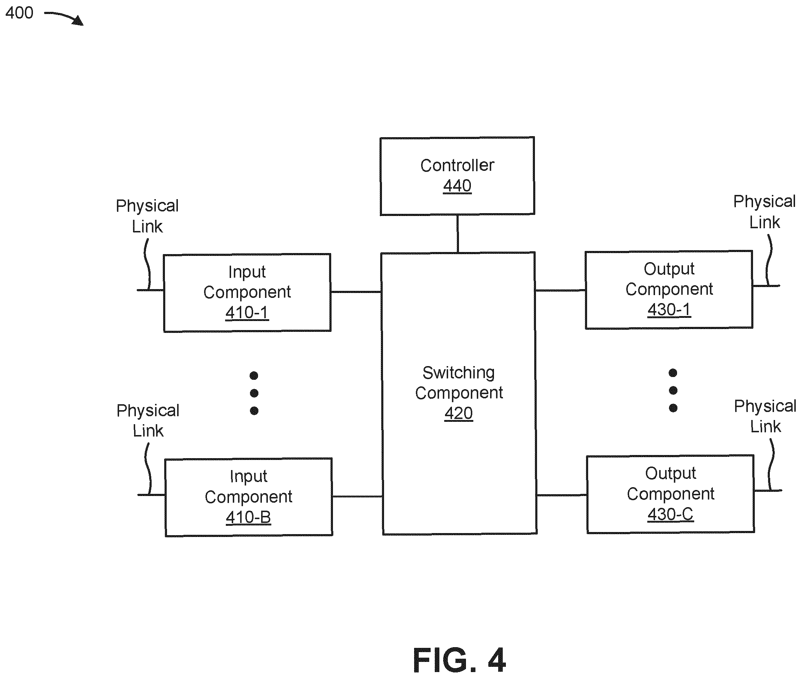

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions stored by a non-transitory computer-readable medium. A computer-readable medium is defined herein as a non-transitory memory device. A memory device includes memory space within a single physical storage device or memory space spread across multiple physical storage devices.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

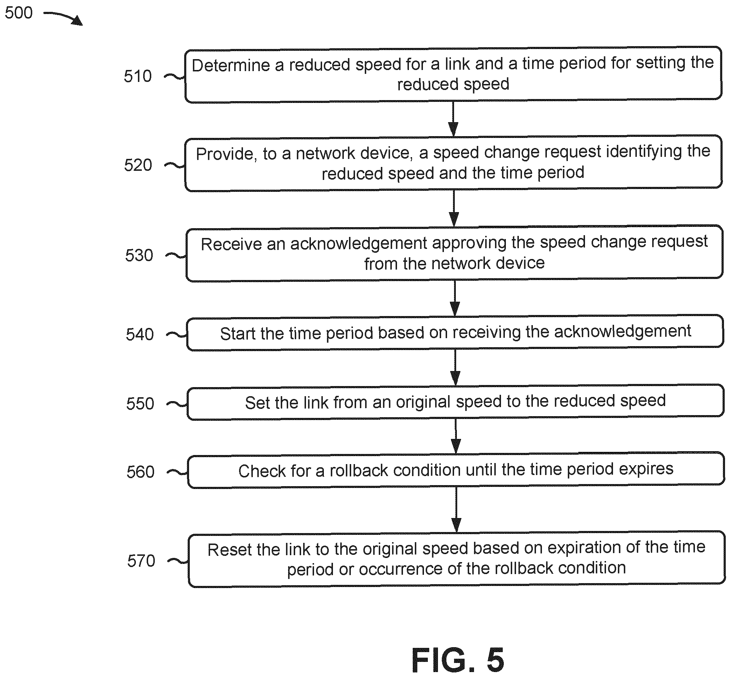

Fig. 5 is a flowchart of an example process 500 for automatically reducing a speed of a link to save power. In some implementations, one or more process blocks of Fig. 5 may be performed by a network device (e.g., the network device 220). In some implementations, one or more process blocks of Fig. 5 may be performed by another device or a group of devices separate from or including the network device, such as an endpoint device (e.g., the endpoint device 210) and/or a server device (e.g., the server device 230). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include determining a reduced speed for a link and a time period for setting the reduced speed (block 510). For example, a first network device may determine a reduced speed for a link and a time period for setting the reduced speed, as described above. In some implementations, determining the reduced speed for the link and the time period for setting the reduced speed includes determining the reduced speed for the link and the time period for setting the reduced speed based on a policy configuration. In some implementations, determining the reduced speed for the link and the time period for setting the reduced speed includes utilizing a machine learning model to determine the reduced speed for the link and the time period for setting the reduced speed. In some implementations, determining the reduced speed for the link and the time period for setting the reduced speed includes receiving metrics associated with the first network device and the second network device, and processing the metrics, with a machine learning model, to determine the reduced speed for the link and the time period for setting the reduced speed.

As further shown in Fig. 5, process 500 may include providing, to a second network device, a speed change request identifying the reduced speed and the time period (block 520). For example, the first network device may provide, to a second network device, a speed change request identifying the reduced speed and the time period, as described above. In some implementations, the speed change request causes the second network device to determine whether to approve the speed change request. In some implementations, the speed change request causes the second network device to start the time period, set the link from the original speed to the reduced speed, and reset the link to the original speed based on expiration of the time period.

As further shown in Fig. 5, process 500 may include receiving an acknowledgement approving the speed change request from the second network device (block 530). For example, the first network device may receive an acknowledgement approving the speed change request from the second network device, as described above. In some implementations, each of the speed change request and the acknowledgement is based on a reserved time-length-value. In some implementations, each of the speed change request and the acknowledgement is based on an organization-specific time-length-value subtype.

As further shown in Fig. 5, process 500 may include starting the time period based on receiving the acknowledgement (block 540). For example, the first network device may start the time period based on receiving the acknowledgement, as described above.

As further shown in Fig. 5, process 500 may include setting the link from an original speed to the reduced speed (block 550). For example, the first network device may set the link from an original speed to the reduced speed, as described above.

As further shown in Fig. 5, process 500 may include checking for a rollback condition until the time period expires (block 560). For example, the first network device may check for a rollback condition until the time period expires, as described above.

As further shown in Fig. 5, process 500 may include resetting the link to the original speed based on expiration of the time period or occurrence of the rollback condition (block 570). For example, the first network device may reset the link to the original speed based on expiration of the time period or occurrence of the rollback condition, as described above.

In some implementations, process 500 includes storing data identifying the link, the time period, and the reduced speed in a persistent data structure. In some implementations, process 500 includes rebooting the first network device prior to expiration of the time period, and utilizing the data identifying the link, the time period, and the reduced speed to set the link from the original speed to the reduced speed.

In some implementations, process 500 includes determining another reduced speed for the link and another time period for setting the reduced speed; providing, to the second network device, another speed change request identifying the other reduced speed and the other time period; receiving, from the second network device, another acknowledgement denying the other speed change request; and providing, to the second network device, still another speed change request identifying the other reduced speed and another time period.

In some implementations, process 500 includes determining another reduced speed for the link and another time period for setting the reduced speed; providing, to the second network device, another speed change request identifying the other reduced speed and the other time period; and providing, to the second network device and based on failing to receive another acknowledgement of the other speed change request, still another speed change request identifying the other reduced speed and another time period.

In some implementations, process 500 includes identifying the rollback condition based on checking for the rollback condition, and resetting the link to the original speed based on identifying the rollback condition and prior to expiration of the time period.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Thus, from one perspective, there has now been described a first network device may determine a reduced speed for a link and a time period for setting the reduced speed, and may provide, to a second network device, a speed change request identifying the reduced speed and the time period. The first network device may receive an acknowledgement approving the speed change request from the second network device, and may start the time period based on receiving the acknowledgement. The first network device may set the link from an original speed to the reduced speed, and may check for a rollback condition until the time period expires. The first network device may reset the link to the original speed based on expiration of the time period or occurrence of the rollback condition.

Further examples of feature combinations taught by the present disclosure are set out in the following numbered clauses:
1. A method, comprising:
   determining, by a first network device, a reduced speed for a link and a time period for setting the reduced speed;
   providing, by the first network device and to a second network device, a speed change request identifying the reduced speed and the time period;
   receiving, by the first network device, an acknowledgement approving the speed change request from the second network device;
   starting, by the first network device, the time period based on receiving the acknowledgement;
   setting, by the first network device, the link from an original speed to the reduced speed;
   checking, by the first network device, for a rollback condition until the time period expires; and
   resetting, by the first network device, the link to the original speed based on expiration of the time period or occurrence of the rollback condition.
2. The method of clause 1, further comprising:
   storing data identifying the link, the time period, and the reduced speed in a persistent data structure.
3. The method of clause 2, further comprising:
   rebooting the first network device prior to expiration of the time period; and
   utilizing the data identifying the link, the time period, and the reduced speed to set the link from the original speed to the reduced speed.
4. The method of any preceding clause, wherein the speed change request causes the second network device to determine whether to approve the speed change request.
5. The method of any preceding clause, further comprising:
   determining another reduced speed for the link and another time period for setting the reduced speed;
   providing, to the second network device, another speed change request identifying the other reduced speed and the other time period;
   receiving, from the second network device, another acknowledgement denying the other speed change request; and
   providing, to the second network device, still another speed change request identifying the other reduced speed and another time period.
6. The method of any preceding clause, further comprising:
   determining another reduced speed for the link and another time period for setting the reduced speed;
   providing, to the second network device, another speed change request identifying the other reduced speed and the other time period; and
   providing, to the second network device and based on failing to receive another acknowledgement of the other speed change request, still another speed change request identifying the other reduced speed and another time period.
7. The method of any preceding clause, wherein the speed change request causes the second network device to:
   start the time period,
   set the link from the original speed to the reduced speed, and
   reset the link to the original speed based on expiration of the time period.
8. A first network device, comprising:
   one or more memories; and
   one or more processors to:
      determine a reduced speed for a link and a time period for setting the reduced speed;
      provide, to a second network device, a speed change request identifying the reduced speed and the time period;
      receive an acknowledgement approving the speed change request from the second network device;
      start the time period based on receiving the acknowledgement;
      set the link from an original speed to the reduced speed;
      store data identifying the link, the time period, and the reduced speed in a persistent data structure;
      check for a rollback condition until the time period expires; and
      reset the link to the original speed based on expiration of the time period or occurrence of the rollback condition.
9. The first network device of clause 8, wherein each of the speed change request and the acknowledgement is based on a reserved time-length-value.
10. The first network device of clause 8, wherein each of the speed change request and the acknowledgement is based on an organization-specific time-length-value subtype.
11. The first network device of any of clauses 8 to 10, wherein the one or more processors, to determine the reduced speed for the link and the time period for setting the reduced speed, are to:
   determine the reduced speed for the link and the time period for setting the reduced speed based on a policy configuration.
12. The first network device of any of clauses 8 to 10, wherein the one or more processors, to determine the reduced speed for the link and the time period for setting the reduced speed, are to:
   utilize a machine learning model to determine the reduced speed for the link and the time period for setting the reduced speed.
13. The first network device of any of clauses 8 to 10, wherein the one or more processors, to determine the reduced speed for the link and the time period for setting the reduced speed, are to:
   receive metrics associated with the first network device and the second network device; and
   process the metrics, with a machine learning model, to determine the reduced speed for the link and the time period for setting the reduced speed.
14. The first network device of any of clauses 8 to 13, wherein the one or more processors are further to:
   identify the rollback condition based on checking for the rollback condition; and
   reset the link to the original speed based on identifying the rollback condition and prior to expiration of the time period.
15. A computer-readable medium comprising a set of instructions, the set of instructions comprising:
   one or more instructions that, when executed by one or more processors of a first network device, cause the first network device to:
   determine a reduced speed for a link and a time period for setting the reduced speed;
   provide, to a second network device, a speed change request identifying the reduced speed and the time period;
   receive, from the second network device, an acknowledgement approving the speed change request,
      wherein each of the speed change request and the acknowledgement is based on a reserved time-length-value (TLV) or an organization-specific TLV subtype;
   start the time period based on receiving the acknowledgement;
   set the link from an original speed to the reduced speed;
   check for a rollback condition until the time period expires; and
   reset the link to the original speed based on expiration of the time period or occurrence of the rollback condition.
16. The computer-readable medium of clause 15, wherein the one or more instructions further cause the first network device to:
   store data identifying the link, the time period, and the reduced speed in a persistent data structure.
17. The computer-readable medium of clause 16, wherein the one or more instructions further cause the first network device to:
   reboot the first network device prior to expiration of the time period; and
   utilize the data identifying the link, the time period, and the reduced speed to set the link from the original speed to the reduced speed.
18. The computer-readable medium of any of clauses 15 to 17, wherein the one or more instructions, that cause the first network device to determine the reduced speed for the link and the time period for setting the reduced speed, cause the first network device to:
   determine the reduced speed for the link and the time period for setting the reduced speed based on a policy configuration.
19. The computer-readable medium of any of clauses 15 to 17, wherein the one or more instructions, that cause the first network device to determine the reduced speed for the link and the time period for setting the reduced speed, cause the first network device to:
   utilize a machine learning model to determine the reduced speed for the link and the time period for setting the reduced speed.
20. The computer-readable medium of any of clauses 15 to 19, wherein the one or more instructions further cause the first network device to:
   identify the rollback condition based on checking for the rollback condition; and
   reset the link to the original speed based on identifying the rollback condition and prior to expiration of the time period.

## Claims

1. A method, comprising:
determining, by a first network device, a reduced speed for a link and a time period for setting the reduced speed;
providing, by the first network device and to a second network device, a speed change request identifying the reduced speed and the time period;
receiving, by the first network device, an acknowledgement approving the speed change request from the second network device;
starting, by the first network device, the time period based on receiving the acknowledgement;
setting, by the first network device, the link from an original speed to the reduced speed;
checking, by the first network device, for a rollback condition until the time period expires; and
resetting, by the first network device, the link to the original speed based on expiration of the time period or occurrence of the rollback condition.

2. The method of claim 1, further comprising:
storing data identifying the link, the time period, and the reduced speed in a persistent data structure.

3. The method of claim 2, further comprising:
rebooting the first network device prior to expiration of the time period; and
utilizing the data identifying the link, the time period, and the reduced speed to set the link from the original speed to the reduced speed.

4. The method of any preceding claim, wherein the speed change request causes the second network device to determine whether to approve the speed change request.

5. The method of any preceding claim, further comprising:
determining another reduced speed for the link and another time period for setting the reduced speed;
providing, to the second network device, another speed change request identifying the other reduced speed and the other time period;
receiving, from the second network device, another acknowledgement denying the other speed change request; and
providing, to the second network device, still another speed change request identifying the other reduced speed and another time period.

6. The method of any preceding claim, further comprising:
determining another reduced speed for the link and another time period for setting the reduced speed;
providing, to the second network device, another speed change request identifying the other reduced speed and the other time period; and
providing, to the second network device and based on failing to receive another acknowledgement of the other speed change request, still another speed change request identifying the other reduced speed and another time period.

7. The method of any preceding claim, wherein the speed change request causes the second network device to:
start the time period,
set the link from the original speed to the reduced speed, and
reset the link to the original speed based on expiration of the time period.

8. A first network device, comprising:
one or more memories; and
one or more processors to:
determine a reduced speed for a link and a time period for setting the reduced speed;
provide, to a second network device, a speed change request identifying the reduced speed and the time period;
receive an acknowledgement approving the speed change request from the second network device;
start the time period based on receiving the acknowledgement;
set the link from an original speed to the reduced speed;
store data identifying the link, the time period, and the reduced speed in a persistent data structure;
check for a rollback condition until the time period expires; and
reset the link to the original speed based on expiration of the time period or occurrence of the rollback condition.

9. The first network device of claim 8, wherein each of the speed change request and the acknowledgement is based on a reserved time-length-value.

10. The first network device of claim 8, wherein each of the speed change request and the acknowledgement is based on an organization-specific time-length-value subtype.

11. The first network device of any of claims 8 to 10, wherein the one or more processors, to determine the reduced speed for the link and the time period for setting the reduced speed, are to:
determine the reduced speed for the link and the time period for setting the reduced speed based on a policy configuration.

12. The first network device of any of claims 8 to 10, wherein the one or more processors, to determine the reduced speed for the link and the time period for setting the reduced speed, are to:
utilize a machine learning model to determine the reduced speed for the link and the time period for setting the reduced speed.

13. The first network device of any of claims 8 to 10, wherein the one or more processors, to determine the reduced speed for the link and the time period for setting the reduced speed, are to:
receive metrics associated with the first network device and the second network device; and
process the metrics, with a machine learning model, to determine the reduced speed for the link and the time period for setting the reduced speed.

14. The first network device of any of claims 8 to 13, wherein the one or more processors are further to:
identify the rollback condition based on checking for the rollback condition; and
reset the link to the original speed based on identifying the rollback condition and prior to expiration of the time period.

15. A computer-readable medium comprising a set of instructions, the set of instructions comprising:
one or more instructions that, when executed by one or more processors of a first network device, cause the first network device to:
determine a reduced speed for a link and a time period for setting the reduced speed;
provide, to a second network device, a speed change request identifying the reduced speed and the time period;
receive, from the second network device, an acknowledgement approving the speed change request,
wherein each of the speed change request and the acknowledgement is based on a reserved time-length-value (TLV) or an organization-specific TLV subtype;
start the time period based on receiving the acknowledgement;
set the link from an original speed to the reduced speed;
check for a rollback condition until the time period expires; and
reset the link to the original speed based on expiration of the time period or occurrence of the rollback condition.
